# EUROPEAN PATENT APPLICATION

(11) **EP 2 555 140 A1**
(43) Date of publication of application: **06.02.2013**
(21) Application number: 11306008.1
(22) Date of filing: 03.08.2011
(51) Int. Cl.: G06Q 10/00

(54) **A method, a system, a server for operating a power grid**

(71) Applicant: Alcatel Lucent, 75007 Paris (FR)
(72) Inventor: Kopp, Dieter, 75428 Illingen (DE); Templ Wolfgang, 74372 Sersheim (DE); Stoecker, Klaus, 70567 Stuttgart (DE)
(74) Representative: Kleinbub, Oliver

(57) **Abstract**

The invention concerns a method for operating a power grid (100), **wherein** devices (103, 104) forming part of said power grid (100) are represented as virtual resources, said method comprising the steps of
- Receiving a request to access at least one virtual resource, and
- Providing access to a device (103, 104) of said power grid (100) embodying the requested virtual resource.

## Description

### Field of the invention

The invention relates to a method, a system, a server for operating a power grid.

### Background

In an implementation capable of operating a power grid individual elements, such as power plants or stations are controlled individually. The devices controlled are known in detail; hence changes to devices, e.g. due to temporary or permanent outages or an exchange of devices need to be updated consequently throughout the network.

### Summary

The object of the invention is thus to provide a more flexible control of a power grid.

The main idea of the invention is to operate a power grid, wherein devices forming part of said power grid are represented as virtual resources, with the steps of
- Receiving a request to access at least one virtual resource, and
- Providing access to a device of said power grid embodying the requested virtual resource.

Virtual resources may be accessed from outside without detailed knowledge of their characteristic hence making access or changes to the devices embodying the virtual resource more flexible.

Advantageously multiple devices forming part of said power grid are represented as one virtual resource, in particular as a cluster. The abstraction layer of the virtual resource facilitates access.

Advantageously at least two of said devices are electrically connectable to embody a single virtual resource. Combinations increases flexibility further.

Advantageously multiple devices are adapted to represent the same virtual resource, wherein one of said multiple devices is selected to be made accessible to embody requested virtual resource. Redundancy increases fault tolerance.

Advantageously the steps of
- Determining information about a virtual resource representing at least one device of said power grid, and
- Sending information about said virtual resource are executed. This way the information about the virtual resources available is distributed.

Advantageously a characteristic of a first resource of said power grid, in particular if the load on a power transmission line of said power grid is below a predetermined threshold, is determined and power is transferred from a second resource, in particular a first power storage, to a third resource, in particular a second power storage, via said first resource, in particular said power transmission line, depending on the characteristic, in particular in case said load is below said predetermined threshold. The individual resources are used optimally this way.

Further developments of the invention can be gathered from dependent claims and the following description.

### Brief description of the figures

In the following the invention will be explained further making reference to the attached drawings.
Fig. 1 schematically shows a first part of power grid
Fig. 2 schematically shows a flow chart.

### Description of the embodiments

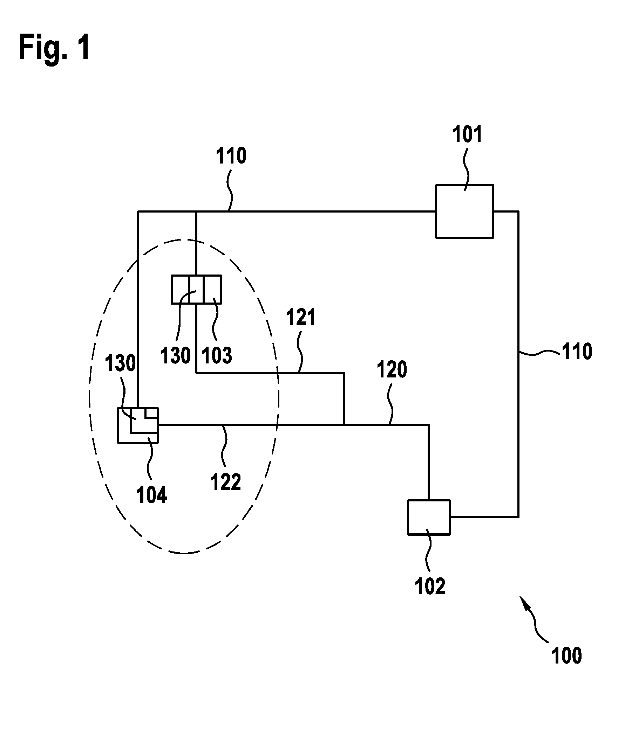

Figure 1 shows a first part of power grid 100.

Said power grid 100 comprises a server 101 for operating said power grid 100. Said server 101 comprises a processor, a storage, an actuator, a sender and a receiver.

Information about said power grid 100 is stored on said storage. In said information particular devices forming part of said power grid 100 are represented as virtual resources

Said processor is adapted to determine information about a virtual resource representing at least one device of said power grid.

Said sender is adapted to send information about said virtual resources, for example information about available virtual resources. In particular said sender is adapted to send said information in response to a request received. Alternatively or additionally said sender may be adapted to send said information frequently, e.g. in a broadcast message repeated every minute. Hence available virtual resources are advertised to any interested user.

Said receiver is adapted to receive a request to access at least one virtual resource. Said request is for example received from a client 102 via a data link 110 connecting said client 102 with said server 101.

Said client 102 is for example a home automation computer installed in a resilient home. Said request is for example sent by said client 102 upon detection of electrical power demand required by an appliance installed in said resilient home and connected to said power grid 100 via said home automation computer. Alternatively or additionally said request may be sent upon any other relevant event. For example upon detection of a power supply by a solar or wind power generator installed in said resilient home and connected to said power grid 100 via said home automation computer.

Said home automation computer is for example executing a computer program adapted to determine the request to be sent to said server 101. For example in case of a power demand, a request to access power is sent to said server 101. Likewise in case of a power supply a request to supply power to said power grid 100 may be sent.

Said processor is adapted to determine a device of said power grid 100 embodying the requested virtual resource to be made accessible, in particular upon receipt of said request to access at least one virtual resource.

Said virtual resource may be a power generator or a power storage. In the example depicted in Figure 1, a first power storage 103 and a second power storage 104 are accessible as the virtual resource "power demand". The name of the virtual resource may be chosen arbitrarily. It may be an identifier instead of a name, e.g. a number. The devices forming one virtual resource may be accessible as another virtual resource. For example a virtual resource "power supply" comprising the same first power storage 103 and second power storage 104 may be defined.

According to this example, said processor is adapted to select said first power storage 103, said second power storage 104 or both to embody said virtual resource.

In case of a request for the virtual resource "power demand" the power storage having stored the most electrical power may be selected. Likewise in case of a request for the virtual resource "power supply" the power storage having stored the least electrical power may be selected. To that end said server 101 and said devices are for example adapted to exchange information about the load status of individual devices. In the example said server 101 and said first power storage 103 or said second power storage 104 are adapted to exchange said information via said data link 110. Alternatively mathematical power grid models may be used instead of the data transfer.

Any other type of selection criteria may apply, e.g. distance to the requesting client 102 or cost of transport.

Said actuator is adapted to provide access to any of said devices embodying the requested virtual resource. To that end said devices comprise a remote actuator 130. Said remote actuator 130 is for example a switch that is mounted to individual devices for electrically connecting individual devices to said power grid 100 upon receipt of a command from said actuator of said server 101. In this case said actuator in said server 101 and said remote actuator 130 are for example adapted to communicate via a data link 110.

Providing access to a device of said power grid embodying the requested virtual resource in this context refers to the aforementioned steps of selecting and actuating.

As describe above, multiple devices forming part of said power grid 100 are represented as one virtual resource, e.g. "power demand" or "power supply", in particular as a cluster. This is depicted in figure 1 as dashed circle around said first power storage 103 and said second power storage 104.

This means that on the one hand from the multiple devices adapted to represent the same virtual resource, one of said multiple devices may be selected to be made accessible to embody requested virtual resource.

On the other hand said devices may be electrically connectable to embody a single virtual resource. As depicted in figure 1, said client 102 is connected via a first power line 120 to one end of a second power line 121 and one end of a third power line 122. The other end of said second power line 121 is connected to said first power storage 103 and the other end of said third power line 122 is connected to said second power storage 104. This also means that said first power storage 103 and said second power storage 104 are electrically connectable, e.g. by connecting both devices to said power grid 100 at the same time. This means that a single virtual resource may in fact comprise of multiple devices. The devices in the example are of the same kind, i.e. power storages. However the invention extends to any mix of electrical devices selectable to form a virtual resource. In particular power generators or or a battery, e.g. of a electrical vehicle, may be within the same virtual resource of "power demand" together with aforementioned power storages 103, 104. Furthermore any type of power sinks, such a pump for pumping up water in a storage of a hydro-electrical power plant or a battery, e.g. of a electrical vehicle, may be part of the virtual resource "power supply".

Furthermore said processor may be adapted to determine a characteristic of a first resource of said power grid 100, in particular a power transmission line of said power grid 100 is below a predetermined threshold. In the example depicted in figure one, said power transmission line for example comprises said second power line 121 and said third power line 122. For example the power transfer load on said second power transmission line 121 and said third power transmission line 122 is said characteristic and is compared to said predetermined threshold.

Furthermore said server 101 is in this case adapted to cause transfer power from a second resource, in particular said first power storage 103, to a third resource, in particular said second power storage 104, via said first resource, in particular said power transmission line, depending on the characteristic, in particular in case said load is below said predetermined threshold.

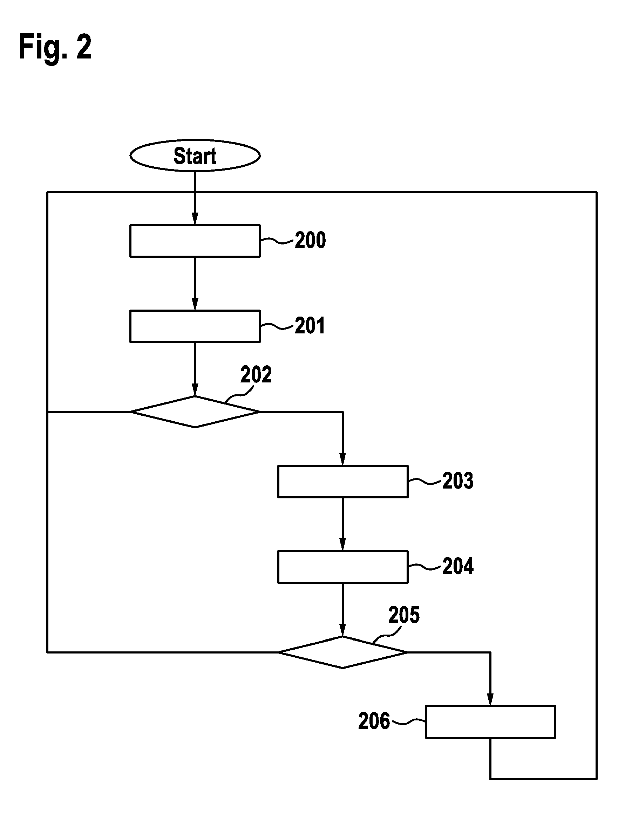

A method for operating said power grid 100 is described below making reference to figure 2. Said method starts for example upon trigger by a user starting a program on said server 101.

Afterwards a step 200 is executed.

In said step 200, information about available virtual resources is read from storage. Said information may have been stored by an operator or may be updated frequently from input received via said data link 110. Afterwards a step 201 is executed.

In said step 201 a message comprising information about said available virtual resources is broadcasted. Afterwards a step 202 is executed.

Said steps 200 and 201 are optional and may be performed only once at program start or omitted in case said information about said virtual resources is static.

In said step 202 a test is performed to determine whether a request for a virtual resource has been received. In case said request has been received, a step 203 is executed. Otherwise said step 200 is executed. Alternatively said step 201 may be executed, when the information about virtual resources is static. Optionally a fix or adjustable time delay, e.g. of 1 minute may be introduced before executing said step 200 or 201 again.

In said step 203 a device appropriate for embodying the requested virtual resource is selected. For example, in case a request for said virtual resource "power demand" is received, either said first power storage 103 or said second power storage 104 are selected depending on their respective load status, requested or received by said server 101 via said data link 110. Afterwards a step 204 is executed.

In said step 204 the virtual resource is provided by providing access to the selected device. For example said actuator is triggering said remote actuator to electrically connect said first power storage 103 or said second power storage 104 to said power grid 100.

Afterwards a step 205 is executed.

In said step 205 a test is performed to determine if a request to stop accessing a previously requested virtual resource has been received. In case such request has been received, a step 206 is executed. Otherwise said step 200 is executed.

In said step 206 the device embodying the previously requested virtual resource is reset to the state from before the request to start accessing. For example said device is disconnected from the power grid 100 via said actuator, remote actuator 130. Afterwards said step 200 is executed.

Said method ends for example upon receipt of a trigger by a user terminating said program on said server 101.

To use the individual virtual resources optimally, the characteristic of a first resource of said power grid 100 may be determined. In this case power is transferred from a second resource, in particular said first power storage 103, to a third resource, in particular said second power storage 104, via said first resource, in particular said power transmission line, depending on the characteristic. For example if the load on the power transmission line of said power grid 100 is below said predetermined threshold said power transmission line may carry more load. In this case said power may be transferred in order to make said power available to said client 102 faster upon a later demand. This is particularly effective in case said first power storage 103 is far from said client 102 and said second power storage 104 is close to said client 102. In this case the selection process described above may consider said second power storage 104 as preferred device for embodying said virtual resource "power demand" and select it. With the additional step of transferring power from said first power storage 103 to said second power storage 104, the power available in said second power storage 104 is kept at the appropriate level without overloading the power transmission line.

Said data link 110 is for example a local area network (LAN), wireless local area network (WLAN, 802.11n) or wide area network (WAN). Said connection is for example according to the well known internet protocol (IP), user datagram protocol (UDP), transmission control protocol (TCP) or stream control transmission protocol (SCTP). Signaling is for example according to the well known Simple Object Access Protocol (SOAP), Representational State Transfer (REST) or session initiation protocol (SIP) or Internet Protocol Multimedia Subsystem (IMS). Addressing may be done using the well known uniform resource locators (URL), uniform resource identifiers (URI).

The connection can but must not be directly between the devices. The typical use is on wide area networks with multiple intermediate devices.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for operating a power grid (100), **wherein** devices (103, 104, 121, 122) forming part of said power grid (100) are represented as virtual resources, said method comprising the steps of
- Receiving (202) a request to access at least one virtual resource, and
- Providing (204) access to a device (103, 104) of said power grid (100) embodying the requested virtual resource.

2. The method according to claim 1, wherein multiple devices (103, 104, 121, 122) forming part of said power grid (100) are represented as one virtual resource, in particular as a cluster.

3. The method according to claim 1, wherein at least two of said devices (103, 104, 121, 122) are electrically connectable to embody a single virtual resource.

4. The method according to claim 1, wherein multiple devices (103, 104, 121, 122) are adapted to represent the same virtual resource, wherein at least one of said multiple devices (103, 104, 121, 122) is selected (203) to be made accessible to embody requested virtual resource.

5. The method according to claim 1, further comprising the steps of
- Determining (200) information about a virtual resource representing at least one device (103, 104, 121, 122) of said power grid (100), and
- Sending (201) information about said virtual resource.

6. The method according to claim 1, further comprising the step of determining a characteristic of a first resource (121, 122) of said power grid (100), in particular if the load on a power transmission line of said power grid (100) is below a predetermined threshold, and to transfer power from a second resource (103), in particular a first power storage, to a third resource (104), in particular a second power storage, via said first resource (121, 122), in particular said power transmission line, depending on the characteristic, in particular in case said load is below said predetermined threshold.

7. A server for operating a power grid (100), **wherein** devices (103, 104, 121, 122) forming part of said power grid (100) are represented as virtual resources, comprising
- A receiver adapted to receive (202) a request to access at least one virtual resource, and
- A processor adapted to determine (203) a device (103, 104) of said power grid (100) embodying the requested virtual resource to be made accessible.

8. The server according to claim 7, comprising
- A sender adapted to send (201) information about said virtual resources.

9. The server according to claim 7, comprising
- An actuator adapted to provide access (204) to said device (103, 104, 121, 122) embodying the requested virtual resource.

10. The server according to claim 7, comprising
- A processor adapted to determine (200) information about a virtual resource representing at least on device (103, 104, 121, 122) of said power grid (100), and
- A sender adapted to send (201) information about said virtual resource.

11. A system for operating a power grid (100), **wherein** devices (103, 104, 121, 122) forming part of said power grid (100) are represented as virtual resources, comprising
- A receiver adapted to receive (202) a request to access at least one virtual resource,
- A processor adapted to determine (203) a device (103, 104, 121, 122) of said power grid (100) embodying the requested virtual resource to be made accessible, and
- An actuator adapted to make said device (103, 104, 121, 122) of said power grid (100) embodying the requested virtual resource accessible (204).

12. A computer program, **wherein** said computer program, when executed on a computer, causes the computer to perform the steps of the method according to claim 1.

13. A computer program product comprising a computer usable medium having a computer readable program, **wherein** said computer readable program, when executed on a computer, causes the computer to perform the steps of the method according to claim 1.
